Europäisches Patentamt

**European Patent Office**

Office européen des brevets

(11) Veröffentlichungsnummer : **0 070 487**
**B1**

(12) # EUROPÄISCHE PATENTSCHRIFT

(45) Veröffentlichungstag der Patentschrift :
**17.10.84**

(51) Int. Cl.³ : **B 29 D 27/02, B 29 B 1/06**

(21) Anmeldenummer : **82106204.9**

(22) Anmeldetag : **10.07.82**

(54) **Einrichtung zum Herstellen eines fliessfähigen Reaktionsgemisches aus mindestens zwei fliessfähigen, miteinander zu Massivstoff oder Schaumstoff reagierenden Komponenten.**

(30) Priorität : 22.07.81 DE 3128914
15.09.81 DE 3136611

(43) Veröffentlichungstag der Anmeldung :
**26.01.83 Patentblatt 83/04**

(45) Bekanntmachung des Hinweises auf die Patenterteilung : **17.10.84 Patentblatt 84/42**

(84) Benannte Vertragsstaaten :
**AT BE DE FR GB IT**

(56) Entgegenhaltungen :
**EP-A- 0 021 328**
**AT-B- 313 559**
**AT-B- 351 241**
**DD-A- 118 244**
**DE-A- 2 346 347**
**DE-A- 2 742 018**
**DE-A- 2 823 398**
**DE-C- 1 779 037**

(73) Patentinhaber : **MASCHINENFABRIK HENNECKE**
**GMBH**
**Postfach 1180**
**D-5205 St. Augustin 1 (DE)**

(72) Erfinder : **Proksa, Ferdinand, Dr.**
**Am Arenzberg 9**
**D-5090 Leverkusen 31 (DE)**
Erfinder : **Sulzbach, Hans-Michael**
**Herman-Loens-Strasse 12**
**D-5330 Koenigswinter 51 (DE)**
Erfinder : **Raffel, Reiner, Dipl.-Ing.**
**Mueschbungert 2**
**D-5200 Siegburg (DE)**
Erfinder : **Althausen, Ferdinand**
**Niederwennerscheid 48**
**D-5206 Neunkirchen 1 (DE)**

(74) Vertreter : **Müller, Heinz-Gerd, Dipl.-Ing. et al**
**BAYER AG Konzernverwaltung RP Patentabteilung**
**D-5090 Leverkusen 1, Bayerwerk (DE)**

Jouve, 18, rue St-Denis, 75001 Paris, France

**Beschreibung**

Die Erfindung bezieht sich auf eine Einrichtung zum Herstellen eines fließfähigen Reaktionsgemisches aus mindestens zwei fließfähigen, miteinander zu Massivstoff oder Schaumstoff reagierenden Komponenten, bestehend aus :

a) Vorratsbehältern, von denen
b) Zuleitungen über
c) Dosierpumpen zu einem
d) Mischkopf führen, welcher eine
e) Mischkammer mit zugeordnetem
f) Ausstoßkolben enthält, in welche Zuleitungen mittels
g) Einspritzdüsen münden, welche
h) quer zur Längsachse der Mischkammer angeordnet sind, wobei
i) mindestens eine der Einspritzdüsen wenigstens annähernd tangential in die Mischkammer einmündet.

Aus DE-B-1 779 037 ist ein Mischkopf bekannt, dessen Einspritzdüsen schräg zur Achse der Auslaßöffnung und zu dieser Auslaßöffnung in entgegengesetzter Richtung angeordnet sind. Außerdem sind die Einspritzdüsen schwenkbar gelagert, so daß der Winkel, unter dem die Komponenten eingespritzt werden, veränderbar ist. Entgegen der Auslaßöffnung weist die Mischkammer eine Verlängerung auf. Die Art der geometrischen Lage der Verlängerung zur Mischkammer gewährleistet für schwer vermischbare Reaktionskomponenten keine ausreichende Vermischung. Außerdem ist das Gesamtvolumen von Mischkammer und Verlängerung nicht an verschiedene Ausstoßmengen anpaßbar, so daß sich die Verweilzeit bei großem Ausstoß gegenüber geringem Ausstoß erheblich verringert.

Ein ähnlicher Mischkopf ist aus DE-A-2 346 347 ersichtlich. Auch hier sind die Einspritzdüsen V-förmig angeordnet und zielen in eine gegenüberliegende kegelige Vertiefung der Mischkammer. Aus dieser Vertiefung strömt das Reaktionsgemisch schließlich ohne ausreichende Vermischung über eine Ringnase in einen Sammelkanal, aus dem es schließlich in ein Formwerkzeug oder dergleichen gelangt. Dieser Mischkopf weist die gleichen Nachteile wie der zuvor beschriebene auf.

Beide Mischkopfausführungen sind nicht selbstreinigend. Im ersten Fall muß die Mischkammer gespült werden ; im zweiten Fall handelt es sich um eine entformbare Mischkammer, d. h. der in der Mischkammer verbleibende Gemischrest härtet aus und ist über den Anguß mit dem erzeugten Formteil verbunden, so daß er zusammen mit dem Formteil entfernt werden kann. Dieser in der Mischkammer und im Angußkanal ausgehärtete Gemischrest muß vom Formteil entfernt werden und ist Abfall.

DE-A-2 823 398 bezieht sich auf einen Ausstoßkolbenmischkopf mit Drehschiebern. Die Einspritzöffnungen der Drehschieber weisen in Richtung Stirnfläche des Ausstoßkolbens. Die Drehschieber ragen mit einem Teil ihrer Umfangsfläche in die Mischkammer bzw. in das Auslaßrohr hinein und bilden somit eine Einschnürung, durch die ein Staudruck in der Mischkammer erzeugt werden kann. Zum Reinigen von Mischkammer und Auslaßrohr müssen die Drehschieber axial verschoben werden, bis ihre der Kontur der Mischkammerwandung angepaßten Ausnehmungen in den Bereich der Mischkammer bzw. des Auslaßrohres zu liegen kommen, so daß der Ausstoßkolben hindurchfahren kann. Um eine Kollision des Ausstoßkolbens mit den Drehschiebern zu vermeiden, bedarf es eines hohen Fertigungsaufwandes bezüglich Genauigkeit der entsprechenden Teile. Die Einspritzöffnungen der Drehschieber haben den Nachteil, daß der Querschnitt nicht durch Androsseln einstellbar ist. Bei Schiebersteuerungen dieser Art können insbesondere bei der Verarbeitung niedrigviskoser Komponenten während der Pausenzeiten Leckprobleme auftreten, weil die Gleitdichtungen zwischen Schieber und Gehäusebohrung trotz enger Passungen nicht immer genügend dicht sind. Eine ausreichende Vermischung schwer mischbarer Reaktionskomponenten ist nicht gewährleistet.

Die zu lösende Aufgabe ist darin zu sehen, eine Einrichtung der eingangs genannten Art zu schaffen, deren Mischkopf Einspritzorgane aufweist, die frei von Abdichtproblemen sind, dessen Mischkammer eine einwandfreie Durchmischung auch schwer vermischbarer Reaktionskomponenten zuläßt, daß die Mischbedingungen wechselnden Anforderungen, wie unterschiedliche Ausstoßmenge, anpaßbar sind und daß dieser Mischkopf selbstreinigend und verlustfrei arbeitet.

Diese Aufgabe wird dadurch gelöst, daß

j) in der Ebene der Einspritzdüsen quer zur Mischkammer eine Drallkammer angeordnet ist, deren
k) Tiefe (t) einstellbar ist, und
l) daß zur Einstellbarkeit der Tiefe (t) ein Schieber vorgesehen ist, dessen zur Mischkammer gerichtete
m) Drallfläche der Kontur der Wandung der Mischkammer entspricht.

Dadurch wird erreicht, daß das gesamte in Turbulenz befindliche Reaktionsgemisch rotiert, wodurch eine besonders intensive Vermischung erfolgt, weil es immer wieder in die Strahlzone gerät. Der Ausstoßkolben sorgt für die Reinigung der Mischkammer und gegebenenfalls des Auslaßrohres, wobei zu diesem Zweck die Tiefe bzw. das Volumen der Drallkammer auf Null dezimiert werden kann. Die Einstellbarkeit der Tiefe der Drallkammer hat den besonderen Vorteil, daß durch ihre damit veränderbare Geometrie bzw. ihr veränderbares Volumen eine Anpassung an die jeweiligen Bedingungen möglich ist, die beispielsweise durch Verarbeitung von Komponenten unterschiedlicher Viskosität oder durch verschiedene Einspritzdrücke, vor allem aber bei unterschiedlichen Ausstoßmengen gegeben sind. Durch diese Drallkammer kann eine optimale Verweilzeit des Gemisches eingestellt werden. Dadurch haben die einzelnen Partikelchen der Komponenten im Reaktionsgemisch genügend Zeit, ihren Reaktionspartner zu finden.

Von besonderem Vorteil ist dabei der drosselfreie Auslauf der Mischkammer, denn es brauchen keinerlei Drosselorgane vorgesehen werden. Bei der neuen Technik werden die Turbulenzzonen, d. h. die Mischzonen, im wesentlichen nicht durch eine geometrische Kammerung erhalten, sondern strömungstechnisch durch die Rotation stabilisiert. Die Einstellbarkeit des Schiebers erfolgt beispielsweise mittels einer dem Schieber zugeordneten Stellschraube mit zugeordneter Skala. Auf diese Weise läßt sich die Tiefe der Drallkammer exakt und reproduzierbar einstellen.

Mittels der der Kontur der Wandung der Mischkammer angepaßten Drallfläche des Schiebers ist sichergestellt, daß beim Reinigungsvorgang keine Gemischreste in der Mischkammer bzw. in der Drallkammer verbleiben, weil diese Drallfläche in der Reinigungsphase durch Vorschieben des Schiebers bündig mit der Mischkammerwandung abschließt.

Bei allen bisherigen Mischkammern ist eine unverhältnismäßig lange Beruhigungszone im Anschluß an die Mischkammer vor dem Einbringen des Gemisches in das Formwerkzeug erforderlich. Die neuartige Gestaltung des vorliegenden Mischkopfes hat den Vorteil, daß sich die in der Drallkammer vorhandene Rotationsbewegung des Reaktionsgemisches durch die Mischkammer bis ins Auslaufrohr fortsetzt, wobei die Restturbulenzen schnell ausklingen und eine Beruhigung des Gemischaustrages erfolgt. Dadurch ist eine extrem kurze Bauweise des Mischkopfes möglich.

Aus AT-B-313 559 ist zwar eine Mischvorrichtung für zumindest zwei insbesondere chemisch reaktionsfähige Kunststoff-Komponenten bekannt, bei welcher die Komponenten in eine Vormischkammer eingeführt werden, wobei die Zuführkanäle mittels eines Schieberkolbens absperrbar sind, dessen Stirnfläche mit der Wandung der senkrecht zur Vormischkammer angeordneten eigentlichen Mischkammer konturgleich ist. Auch hier findet die bekannte Gegenstrom-Injektionsvermischung Anwendung. In der Mischkammer ist eine Transportschnecke vorgesehen. Diese Vorrichtung ist also nicht selbstreinigend.

Eine weitere in AT-B-313 559 offenbarte Ausführungsform zeigt eine in der gleichen Achse wie die Mischkammer angeordnete Vormischkammer. Dabei öffnen die Zuführkanäle tangential in die Vormischkammer. Auch hier besteht wegen der Transportschnecke das Reinigungsproblem. Der Vormischkammer beider Ausführungsformen fehlt die Wirksamkeit als Drallkammer mit gleichzeitiger Verwirbelung.

Nach einer besonderen Ausführungsform der neuen Einrichtung ist der Schieber in Einstellrichtung auf einer Druckfeder abgestützt.

Dadurch wird erreicht, daß die Tiefe der Drallkammer sich durch den in der Mischkammer auftretenden Druck selbsttätig einstellt, wobei die Druckfeder auf einen vorgegebenen Gegendruck eingestellt ist. Es versteht sich, daß die Hubweite des Schiebers zwischen einem Minimum, vorzugsweise Null, und einem Maximum einstellbar sein muß, wozu gegebenenfalls Begrenzungsanschläge vorgesehen sind.

In einer Zeichnung ist die neue Einrichtung in mehreren Ausführungsbeispielen rein schematisch dargestellt und nachstehend näher erläutert. Es zeigen :

Figur 1 die Einrichtung in der Seitenansicht, wobei die unwesentlichen Teile symbolhaft angedeutet und der Mischkopf im Schnitt dargestellt ist,

Figur 2 einen Schnitt gemäß Linie A/B in Fig. 1 und

Figur 3 bis 5 Querschnitte durch Mischköpfe verschiedener abgewandelter Ausführungsformen.

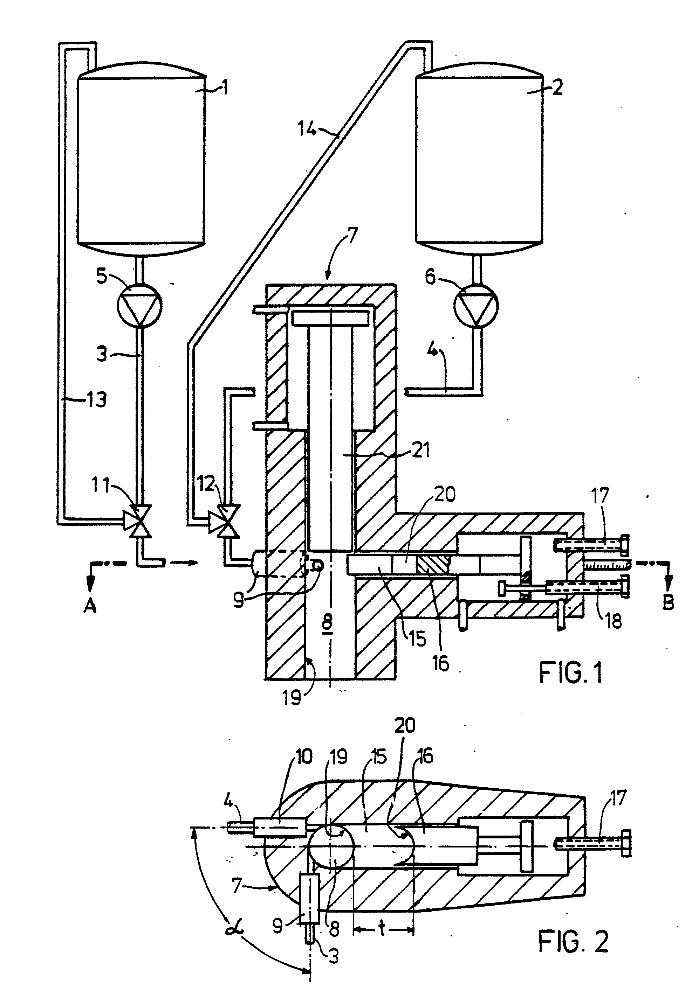

In Fig. 1 und 2 besteht die Einrichtung aus Vorratsbehältern 1, 2 für Polyol bzw. Isocyanat, von denen Zuleitungen 3, 4 über Dosierpumpen 5, 6 zu einem Mischkopf 7 führen, in dessen Mischkammer 8 sie über Einspritzdüsen 9, 10 einmünden. Von Wegeventilen 11, 12 führen Rücklaufleitungen 13, 14 zu den Vorratsbehältern 1, 2 zurück, über welche die Komponenten während der Pausenzeiten im Kreislauf gefördert werden. Die Einspritzdüsen 9, 10 schließen zwischen sich einen Winkel $\alpha$ von 90° ein. Den Einspritzdüsen 9, 10 auf gleicher Ebene gegenüberliegend ist eine Drallkammer 15 angeordnet, in der ein Schieber 16 geführt ist. Die Hubweite des Schiebers 16 ist mittels Anschlagschrauben 17, 18, denen eine Skala zugeordnet ist, einstellbar. Die Breite der Drallkammer 15 entspricht dem Durchmesser der Mischkammer 8 von 10 mm. Sie ist 6 mm hoch. Die Tiefe t ist auf 15 mm eingestellt. Die Stirnfläche 20 des Schiebers 16 ist als Drallfläche ausgebildet und der Kontur der Wandung 19 der Mischkammer 8 angepaßt. Auf diese Weise bildet nach dem Entleeren der Drallkammer 15 (Tiefe t = 0) die Wandung 19 der Mischkammer 8 eine geschlossene Fläche, die mittels eines in der Mischkammer 8 geführten Ausstoßkolbens 21 beim Entleeren der Mischkammer 8 gereinigt werden kann. Der Schieber 16 und der Ausstoßkolben 21 sind hydraulisch betätigbar. Eine nicht dargestellte Steuerung überwacht die Funktionsabläufe aller Schaltorgane, wie Einspritzdüsen 9, 10, Umschaltventile 11, 12, Schieber 16 sowie Ausstoßkolben 21.

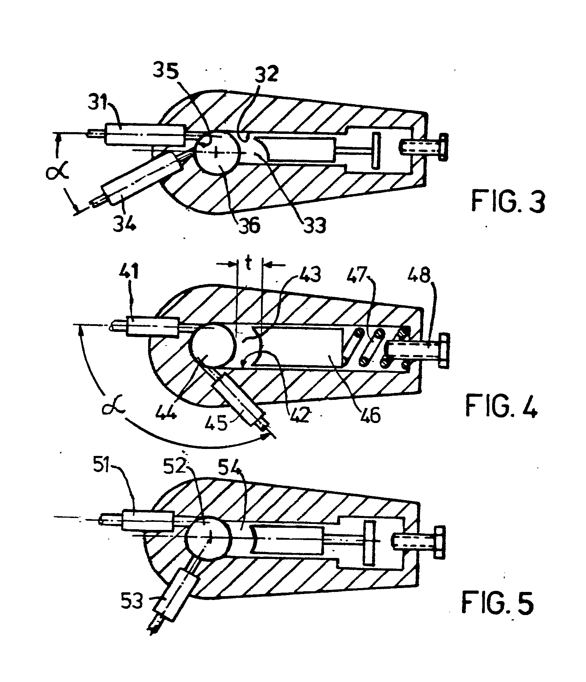

In Fig. 3 ist eine Einspritzdüse 31 tangential zur seitlichen Wandung 32 der Drallkammer 33 angeordnet. Die zweite Einspritzdüse 34 schließt einen möglichst spitzen Winkel α mit der Einspritzdüse 31 ein und mündet in dieser Ausführungsform nur annähernd tangential zur Wandung 35 der Mischkammer 36 ein. Die Drallkammer 33 ist schmaler als die Mischkammer 36 und ist exzentrisch zur Mischkammer 36 angeordnet.

In Fig. 4 mündet eine Einspritzdüse 41 parallel zu einer der seitlichen Wandungen 42 der Drallkammer 43 in die Mischkammer 44 ein, während die andere Einspritzdüse 45 auf der anderen Seite der Mischkammer 44 in jene tangential, aber gegenüber der Einspritzdüse 41 nahezu in Gegenrichtung einmündet. Der Schieber 46 liegt rückseitig gegen eine mechanische Druckfeder 47 an, so daß sich die Tiefe t der Drallkammer 43 selbsttätig einstellt. Ein einstellbarer Anschlag 48 begrenzt die maximale Hubweite. Die Druckfeder 47 übt eine vorgegebene Vorspannung auf den Schieber 46 aus. Es versteht sich, daß anstelle einer mechanischen Druckfeder 47 auch eine hydraulische Anwendung finden kann. Erforderlichenfalls kann dieser Schieber 46 mit einer nicht dargestellten hydraulischen Zwangssteuerung für den Ausstoßvorgang gekoppelt sein.

In Fig. 5 mündet eine Einspritzdüse 51 tangential in die Mischkammer 52. Die zweite Einspritzdüse 53 ist radial in die Mischkammer 52 gerichtet. Die Drallkammer ist mit 54 bezeichnet.

**Ansprüche**

1. Einrichtung zum Herstellen eines fließfähigen Reaktionsgemisches aus mindestens zwei fließfähigen, miteinander zu Massivstoff oder Schaumstoff reagierenden Komponenten, bestehend aus :

a) Vorratsbehältern (1, 2), von denen
b) Zuleitungen (3, 4) über
c) Dosierpumpen (5, 6) zu einem
d) Mischkopf (7) führen, welcher eine
e) Mischkammer (8 ; 36 ; 44 ; 52) mit zugeordnetem
f) Ausstoßkolben (21) enthält, in welche die Zuleitungen (3, 4) mittels
g) Einspritzdüsen (9, 10 ; 31, 34 ; 41, 45 ; 51, 53) münden, welche
h) quer zur Längsachse der Mischkammer (8 ; 36 ; 44 ; 52) angeordnet sind, wobei
i) mindestens eine der Einspritzdüsen (9, 10 ; 31, 34 ; 41, 45 ; 51) wenigstens annähernd tangential in die Mischkammer (8 ; 36 ; 44 ; 52) einmündet,

dadurch gekennzeichnet, daß

j) in der Ebene der Einspritzdüsen (9, 10 ; 31, 34 ; 41, 45 ; 51, 53) quer zur Mischkammer (8 ; 36 ; 44 ; 52) eine Drallkammer (15 ; 33 ; 43 ; 54) angeordnet ist, deren
k) Tiefe (t) einstellbar ist, und
l) daß zur Einstellbarkeit der Tiefe (t) ein Schieber (16 ; 46) vorgesehen ist, dessen zur Mischkammer (8 ; 36 ; 44 ; 52) gerichtete
m) Drallfläche (20) der Kontur der Wandung (19) der Mischkammer (8 ; 36 ; 42 ; 52) entspricht.

2. Einrichtung nach Anspruch 1, dadurch gekennzeichnet, daß der Schieber (46) in Einstellrichtung auf einer Druckfeder (47) abgestützt ist.

**Claims**

1. An apparatus for the production of a flowable reaction mixture from at least two flowable components which react with one another to form a solid material or a foam, consisting of

a) supply vessels (1, 2), from which
b) feed pipes (3, 4) pass via
c) metering pumps (5, 6) to a
d) mixing head (7), which contains
e) a mixing chamber (8 ; 36 ; 44 ; 52) with an associated
f) ejecting piston (21), which mixing chamber the feed pipes (3, 4) enter by means of
g) injection nozzles (9, 10 ; 31, 34 ; 41, 45 ; 51, 53), which
h) are arranged transversely to the longitudinal axis of the mixing chamber (8 ; 36 ; 44 ; 52), wherein
i) at least one of the injection nozzles (9, 10 ; 31, 34 ; 41, 45 ; 51) enters the mixing chamber (8 ; 36 ; 44 ; 52) at least approximately tangentially,

characterised in that

4

**0 070 487**

j) a torsion chamber (15 ; 33 ; 43 ; 54) is arranged transversely to the mixing chamber (8 ; 36 ; 44 ; 52) in line with the plane of the injection nozzles (9, 10 ; 31, 34 ; 41, 45 ; 51, 53), k) the depth (t) of which torsion chamber is adjustable, and

l) in that a slider (16 ; 46) is provided to enable the depth (t) to be adjusted,

m) the twisting surface (20) of which slider, which surface faces the mixing chamber (8 ; 36 ; 44 ; 52), corresponds with the contour of the wall (19) of the mixing chamber (8 ; 36 ; 44 ; 52).

2. An apparatus according to Claim 1, characterised in that the slider (46) is supported by a pressure spring (47) in the direction of the adjustment.

**Revendications**

1. Dispositif pour former un mélange réactionnel fluide d'au moins deux composants fluides qui se transforment en une matière homogène ou une mousse en réagissant entre eux, comprenant :

a) des réservoirs (1, 2), d'où

b) des conduites d'alimentation (3, 4) mènent à travers

c) des pompes de dosage (5, 6) à

d) une tête mélangeuse (7) contenant

e) une chambre de mélange (8 ; 36 ; 44 ; 52) avec

f) un piston éjecteur conjugué à la chambre, dans laquelle les conduites d'alimentation (3, 4) débouchent par

g) des buses d'injection (9, 10 ; 31, 34 ; 41, 45 ; 51, 53) qui

h) sont disposées transversalement à l'axe longitudinal de la chambre de mélange (8 ; 36 ; 44 ; 52) et dont

i) au moins une buse (9, 10 ; 31, 34 ; 41, 45 ; 51) débouche au moins à peu près tangentiellement dans la chambre de mélange (8 ; 36 ; 44 ; 52),

caractérisé en ce que

j) une chambre à tourbillon (15 ; 33 ; 43 ; 54) est disposée transversalement à la chambre de mélange (8 ; 36 ; 44 ; 52) dans le plan des buses (9, 10 ; 31, 34 ; 41, 45 ; 51, 53),

k) la profondeur (t) de la chambre à tourbillon (15 ; 33 ; 43 ; 54) est réglable et

l) le réglage de cette profondeur (t) s'effectue par un poussoir (16 ; 46) possédant

m) une face à tourbillon (20) dirigée vers la chambre de mélange (8 ; 36 ; 44 ; 52) et dont le contour correspond à la paroi (19) de la chambre de mélange (8 ; 36 ; 44 ; 52).

2. Dispositif selon la revendication 1, caractérisé en ce que le poussoir (46) est appuyé dans le sens du réglage sur un ressort de pression (47).

5

FIG. 1

FIG. 2

FIG. 3

FIG. 4

FIG. 5